Europäisches Patentamt

(19) European Patent Office    (11) Publication number: **0 055 977**

Office européen des brevets    **B1**

(12)    # EUROPEAN PATENT SPECIFICATION

(45) Date of publication of patent specification: **25.03.87**    (51) Int. Cl.⁴: **H 04 M 3/30**

(21) Application number: **81830252.3**

(22) Date of filing: **22.12.81**

(54) **Portable instrument for measuring the attenuation of a subscriber's telephone line.**

(30) Priority: **06.01.81 IT 4752081**

(43) Date of publication of application:
**14.07.82 Bulletin 82/28**

(45) Publication of the grant of the patent:
**25.03.87 Bulletin 87/13**

(84) Designated Contracting States:
**DE FR GB NL SE**

(56) References cited:
**DE-A-2 814 097**
**US-A-3 598 929**

*INTERNATIONAL SWITCHING SYMPOSIUM,*
*vol. 2, 25th-29th October 1976 KYOTO (JP) W.*
*FUCHS et al; "Fault Elimination of Subscriber*
*Lines in the Telephone Network of the German*
*Federal Post by means of Telecontrolling and*
*Telemetering" Pages 443-3-1 to 443-3-8*

(73) Proprietor: **SELENIA INDUSTRIE**
**ELETTRONICHE ASSOCIATE S.p.A.**
**Via Tiburtina, KM 12.400**
**I-00131 Roma (IT)**

(72) Inventor: **Basini, Bruno**
**Via Colleferro No. 5**
**I-00189 Rome (IT)**

(74) Representative: **Gustorf, Gerhard, Dipl.-Ing.**
**Mühlenstrasse 1**
**D-8300 Landshut (DE)**

Courier Press, Leamington Spa, England.

## Description

The present invention refers to a portable instrument for measuring the attenuation of a subscriber's telephone line as set out in the precharacterising part of claim 1.

In particular the invention refers to an instrument which allows the measurement of attenuation on users lines and at the same time allowing that the telephone necessary for the calls and service conversation automatically stays connected to the line when the measurement is not being carried out and is excluded during the measurements guaranteeing nevertheless the d.c. current flow in the line.

It is well known that the attenuation measurement of subscriber's telephone lines yields important information on the state of the said lines in case the user encounters anomalies in the service.

Malfunctions due to isolation losses or faulty joints (weak or oxidated clamps, faulty soldered joints) cause attenuations of the signal which are added to those due to the electrical resistance of the line.

Presently those involved with the maintenance of the telephone networks measure the attenuation of a line by means of conventional instruments; i.e. from one end of the line a generator sends a signal of known amplitude, (test tone) with frequency in the acoustic band range, and at the other end a second instrument measures the amplitude of the received signal.

The ratio between the level of the signal transmitted and the level of the signal received represents the attenuation of the telephone line. At several telephone exchanges a calibrated generator is permanently installed to which automatic connection is possible. The measurement can therefore be carried out by dialing a given numerical, which corresponds to the generator in the exchange, thus disconnecting the telephone apparatus from the plug and inserting instead the instrument for measuring the received level (normally a selective voltmeter).

However it is necessary that the following conditions be respected:

a) During the measurement a d.c. current must circulate on the line such as to guarantee the maintenance of the exchange's communication apparatus. In other words the user end of the line must be closed for the d.c. current on an ohmic resistance of the same value presented by a telephone set during the conversation. Such a resistance is normally 150 ohm.

b) For the signal at acoustic frequency necessary for the measurement, the users end of the line must be closed at a resistance equal to the characteristic impedance of the line. Such an impedance is normally 600 ohm.

c) After having composed the number, before disconnecting the telephone set from the line it is necessary to connect the measuring instrument, in such a way that the d.c. current of a) is not interrupted.

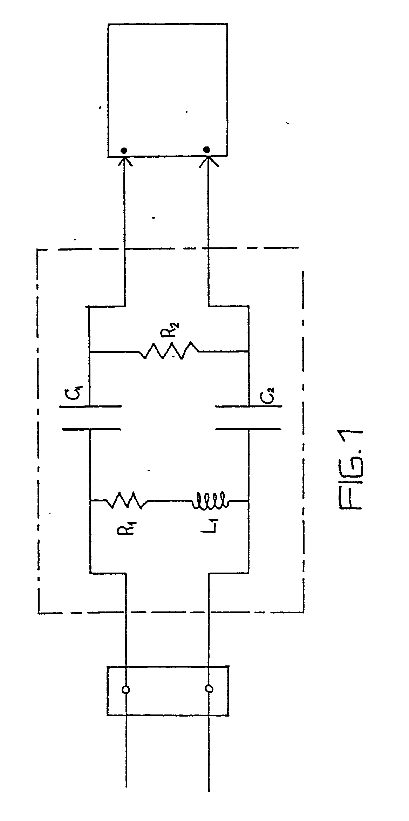

In fact an interruption greater than a few milliseconds would cause "disconnection" of the communication apparatus of the exchange. To be able to guarantee simultaneously the conditions a) and b) it is necessary to modify or supplement the conventional attenuation level measuring instruments, by having at their inputs a circuit such as shown for example in Figure 1, within the chain-dotted line.

A resistor $R_1$ of 150 ohm is connected in series with an inductance $L_1$ constituting a negligible ohmic resistance for d.c. current and constituting a very high impedance for signals at acoustic frequencies utilised for the measurement. Capacitors $C_1$ and $C_2$ even though not allowing d.c. current flow constitute a negligible impedance for a signal at acoustic frequencies which can be closed by a resistor $R_2$ of 600 ohm—equal to the characteristic impedance of the line.

The system described up to this point, which is normally used, presents the following inconveniences:

— The conventional measuring instruments are in many cases cumbersome and heavy.

— The operation of a conventional instrument in many cases requires for the measurement specialised technical personnel.

According to US—A—3 598 929, a test of a telephone receiver by means of a so-called "listenator" test and the test of a telephone transmitter by means of a "whistellator" test is possible. With both test procedures, a rotary switch is operated and a transducer is brought into physical vicinity of the telephone receiver and transmitter, respectively. Furthermore, a line attenuation can be measured. Hitherto, a central office offering a constant signal of predetermined power and frequency is dialed and the signal level arriving at the base station is measured. A special inductance is provided for conducting DC current in order to held up the connection. This special inductance and the further test equipment is connected by means of a test jack with the loop line. However, in this arrangement it is not guaranteed that connection can be held up if the telephone is disconnected and the test jack is connected later, even if this time is in the order of milliseconds. The parallel connection of the telephone and the test equipment, however, will lead to misadaptions of line impedance although adaption of input impedance is intended.

It is an object of the invention to provide a portable instrument for measuring the attenuation of a subscriber's telephone line allowing continuous DC connection when switching from any operational mode to any other operational mode independently of the position of any other operation element and allowing the same electrical characteristics like an ordinary telephone to be maintained during measuring mode.

The instrument for measuring telephone line attenuations should not be heavy and cumbersome and should require for its use the intervention of unskilled workers only.

A further aim of the invention is that of realizing an instrument which can be used in pairs by two operators for measuring the attenuation from the plug of one subscriber to the plug of another subscriber thus including in the attenuation measurement not only the subscribers lines but all the automatic switching and transmission equipments.

A further aim of the invention is that of realising an instrument for measuring the attenuation of the users line in which a particular circuital disposition consents that the telephone set necessary for the call and service conversation remains automatically connected to the line when the measurement is not being carried out. In the instant in which the attenuation measurement is carried out, the telephone set is automatically excluded, guaranteeing however the flow of the line's d.c. current.

These objects are solved by the characterizing clause of claim 1.

According to the invention, a resistor and an inductance are connected in series so that DC current may flow from one terminal of the telephone line to the other terminal thereof. However, this circuit avoids the risk of a DC short circuit between these terminals. Moreover, the impedance characteristic of a normal telephone can be simulated. This is an important aspect of the invention because at measuring a true line attenuation the line should be closed by exactly the same electrical characteristic as under normal conditions. Provision of three push-button switches, instead of a combination of a rotary switch and a test jack to be connected, ensures that DC connections can be maintained and not be interrupted erroneously.

The present invention is now described with particular reference to the Figures in which:

Figure 1 represents a solution normally used in present techniques and

Figure 2 represents the circuit diagram, partially in blocks, of the instrument according to the present invention.

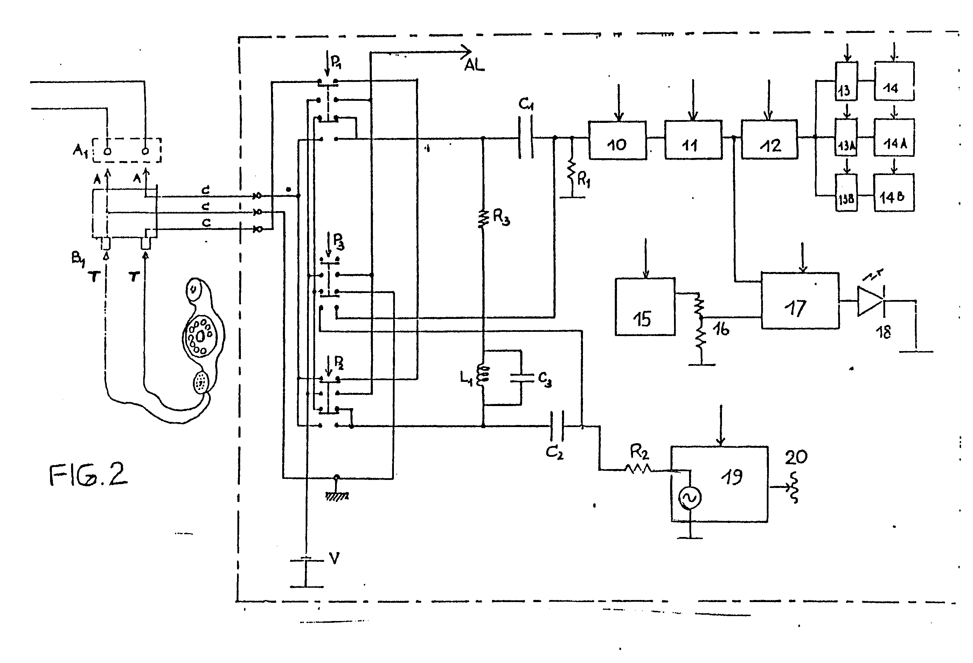

Observing Figure 2 we note represented by $A_1$ the users socket. By $B_1$ is represented the connecting plug which with the pins A, A is connected to the socket $A_1$, with clips T, T is connected to the service telephone and with the contacts C, C, C is connected to the connecting lead to the measuring apparatus which is included in the dashed insert.

Inside said apparatus are represented with conventional symbols, immediately interpretable, the three push buttons $P_1$, $P_2$ and $P_3$ whose functions will be clarified below. V indicates the supply battery, $C_1$, $C_2$ and $C_3$ are capacitors, $R_1$ and $R_3$ are resistances and $L_1$ is an inductance. Furthermore block 10 represents an acoustic frequency amplifier, 11 represents a rectifier and 12 an analogue to digital converter. By 13, $13_A$ and $13_B$ are represented three blocks of PROM memory each of which respectively commands one of the displays 14, $14_A$ and $14_B$.

By 15 is indicated a voltage regulator which supplies the voltage divider 16 which then supplies the voltage reference to the comparator 17 which pilots the light emitting diode (LED) 18.

In 19 we have the oscillator at 800 Hz with the level control 20.

While none of the three buttons $P_1$, $P_2$, $P_3$ of the instrument is pressed, the circuits are not biased by the battery contained in the instrument itself.

In this rest position the telephone line is solely connected to the service telephone set.

Pressing button $P_3$, to check the test-tone level, the telephone line continues to be connected solely to the service telephone set.

In this condition however the circuits of the instrument are fed and the oscillator output at 800 Hz (whose internal impedance is determined by the resistance $R_2$ 600 ohm) is sent directly to the input of the level measuring device whose input impedance is constituted by the resistance $R_1$ (600 ohm). In this way it is possible to control the level of the signal at 800 Hz generated by the oscillator, which constituting a reference level, must be fixed for example at $-6$ dBm.

Eventually it is possible to regulate this level by means of a potentiometer.

Pressing button $P_2$, which sends the signal onto the line, the service telephone is disconnected, the instrument circuits are fed and the signal from the oscillator is sent to the telephone line by means of the capacitor $C_2$, of high value (e.g. 40 µF) and therefore such as to present a negligible impedance to the frequency of 800 Hz.

A second operator, placed at the other end of the line in possession of a second instrument, can measure the signal received by pressing button $P_1$, which in addition to allowing the supply of the instruments circuits, disconnects the telephone set and connects to the line instead the circuits for measuring the received level, by means of the capacitor $C_1$, also a high value (40 µF). The 800 Hz signal coming from the line locks onto the resistance $R_1$ (600 ohm) placed at the input of the measuring circuits.

When the service telephone is not connected (button $P_1$ or $P_2$ pressed) the d.c. current of the line locks across $R_3$ (150 ohm) and $L_1$.

The inductor $L_1$ and the capacitor $C_3$ constitute a parallel resonant circuit and therefore the very high impedance at the head of this circuit in correspondence of the resonance frequency (800 Hz) is such that no current at this frequency circulates across $R_3$.

For the measuring frequency the instrument presents to the line a resistance ($R_1$ or $R_2$) equal to its characteristic impedance. The circuits for measuring the received level are constituted by an amplifier followed by a rectifier.

At the output of the rectifier a d.c. voltage is present of value proportional to the amplitude of the 800 Hz signal present at the input of the amplifier.

This d.c. voltage is sent to an 8 bit analogue to digital converter. The 8 bit words obtained in this way, represent the addresses of three PROM which have the purpose of converting the linear function of the input signal into a logarithm function, in such a way as to obtain, on a diode LED or liquid crystal display, a measure of the signal level at 800 Hz expressed in dBm.

In the described realisation, the first two figures indicate respectively the tens and units, while the third figure indicates tenths of dBm.

The difference between the signal level sent onto line at one end and the signal level received from the other extremity both expressed in dBm, represents therefore, in dB the value of the attenuation of the line.

Normally an acceptability limit is fixed for this value (e.g. 12 dB), this being equivalent to fixing a minimum value for the received signal (−18 dBm). In addition to giving the value of the received signal on a display, the instrument also gives a pilot light indication, in the case when the received signal is greater than the acceptable minimum. This is carried out by means of a voltage comparator which compares the voltage at the output of the rectifier with a reference voltage derived from the battery by means of a voltage regulator and causes the "switching-on" of a luminous diode. In the case that the received signal level at 800 Hz is outside the range of the instrument (for example less than −30 dBm or greater than −6 dBm) the program stored in the PROM causes the visualising of this condition on the display (in case of a very low level for example "L.L." can appear, while in the case of a very high level "H.L." can appear.

## Claims

1. Portable instrument for measuring the attenuation of a subscriber's telephone line including a reference signal generator (19), a level measuring device (10—14) and switch means (P1, P2, P3) providing three different switching positions the first of which connecting said level measuring device with said telephone line, the second of which connecting said reference signal generator with said telephone line and the third of which connecting said level measuring device with said reference signal generator to check said output level, characterized in that the three different switching positions are provided by three press-button switches (P1, P2, P3), thata DC connection between the terminals (A1) of said telephone line is effective independently of the choice of which one of the press-button switches (P1, P2, P3) is operated, that the DC connection comprises a service telephone or an inductance (L1) connected in series with a resistor (R3) dependent on the operated switch (P1, P2, P3) and that the input impedance of said inductance (L1) connected in series with a resistor (R3) corresponds to the input impedance of said service telephone.

2. Portable instrument according to claim 1, characterized in that a capacitor (C3) is connected in parallel with inductance (L1) and that the resonant circuit formed by inductance (L1) and capacitor (C3) is tuned to the frequency of said reference signal generator (19).

3. Portable instrument according to any one of the preceding claims, characterized in that said level measuring device comprises an amplifier (10) connected in series with a rectifier (11) and with an analog to digital converter which by means of PROM elements (13, 13A, 13B) commands three displays (14, 14A, 14B) for logarithmic display of the level of the measured signal and/or the attenuation.

4. Portable instrument according to claim 3, characterized in that the output terminal of said rectifier (11) is also connected to a signal comparator (17) comparing the output signal of said rectifier (11) with a reference signal in such a way that an indicator type element (18) is excited, whenever said signal of said rectifier (11) is greater than a predetermined value.

5. Portable instrument according to any one of the preceding claims, characterized in that said service telephone is connected with said telephone line when none of the press-button switches (P1, P2, P3) is pressed and that said reference signal generator (19) and said level measuring device are disconnected from a power supply, when said three press-button switches (P1, P2, P3) are not pressed.

6. Portable instrument according to any one of the preceding claims, characterized in that the activation of the third press-button switch (P3) leaves said service telephone connected to said telephone line and allows the signal generated by the reference signal generator (19) to be supplied to said level measuring device and that the activation of said first and said second press-button switches (P1, P2) disconnects said service telephone from said telephone line and connects said reference signal generator to said telephone line and connects said telephone line with said level measuring device, respectively.

## Patentansprüche

1. Tragbares Instrument zum Messen der Dämpfung einer Fernsprechteilnehmerleitung, mit einem Bezugssignalgenerator (19), einer Pegelmeßeinrichtung (10—14) und einer Schaltvorrichtung (P1, P2, P3), die drei unterschiedliche Schaltstellungen schafft, von denen die erste die Pegelmeßeinrichtung mit der Fernsprechleitung, die zweite den Bezugssignalgenerator mit der Fernsprechleitung und die dritte die Pegelmeßeinrichtung mit dem Bezugssignalgenerator zum Prüfen des Ausgangspegels verbindet, dadurch gekennzeichnet, daß die drei unterschiedlichen Schaltstellungen durch drei Drucktastenschalter (P1, P2, P3) bereitgestellt werden, daß eine Gleichstromverbindung zwischen den Anschlüssen (A1) der Fernsprechleitung unabhängig von der Wahl des betätigten Drucktastenschalters (P1, P2, P3) wirksam ist, daß die Gleichstromverbindung abhängig von dem betätigten Schalter (P1, P2, P3) einen Wartungs-Fernsprechapparat oder eine in Reihe zu einem Widerstand (R3) geschaltete Induktivität (L1) umfaßt, und daß die Eingangsimpedanz der zu einem Widerstand (R3) in Reihe geschalteten Induktivität (L1) der Eingangsimpedanz des Wartungs-Fernsprechapparats entspricht.

2. Tragbares Instrument nach Anspruch 1, dadurch gekennzeichnet, daß parallel zu der Induktivität (L1) ein Kondensator (C3) geschaltet ist, und daß die durch die Induktivität (L1) und dem Kondensator (C3) gebildete Resonanzschaltung auf die Frequenz des Bezugssignalgenerators (19) agbestimmt ist.

3. Tragbares Instrument nach einem der vorhergehenden Ansprüche, dadurch gekennzeichnet, daß die Pegelmeßeinrichtung einen Verstärker (10) aufweist, der in Reihe mit einem Gleichrichter (11) und mit einem Analog-Digital-Umsetzer geschaltet ist, welcher mit Hilfe von PROM-Elementen (13, 13A, 13B) drei Anzeigen (14, 14A, 14B) zur logarithmischen Darstellung des Pegels des gemessenen Signals und/oder der Dämpfung steuert.

4. Tragbares Instrument nach Anspruch 3, dadurch gekennzeichnet, daß der Ausgangsanschluß des Gleichrichters (11) außerdem an einen Signalvergleicher (17) angeschlossen ist, der das Ausgangssignal des Gleichrichters (11) mit einem Bezugssignal vergleicht, derart, daß ein Anzeigeelement (18) immer dann aktiviert wird, wenn das von dem Gleichrichter (11) kommende Signal größer ist als ein vorbestimmter Wert.

5. Tragbares Instrument nach einem der vorhergehenden Ansprüche, dadurch gekennzeichnet, daß der Wartungs-Fernsprechapparat an die Fernsprechleitung angeschlossen ist, wenn keiner der Drucktastenschalter (P1, P2, P3) gedrückt ist, und daß der Bezugssignalgeneratur (19) und die Pegelmeßeinrichtung von einer Versorgungsspannungsquelle getrennt werden, wenn die drei Drucktastenschalter (P1, P2, P3) nicht gedrückt werden.

6. Tragbares Instrument nach einem der vorhergehenden Ansprüche, dadurch gekennzeichnet, daß das Aktivieren des dritten Drucktastenschalters (P3) das Wartungs-Fernsprechgerät an die Fernsprechleitung angeschlossen läßt und gestattet, daß das von dem Bezugssignalgenerator (19) erzeugte Signal zu der Pegelmeßeinrichtung gelangt, und daß das Aktivieren des ersten und des zweiten Drucktastenschalters (P1, P2) des Wartungs-Fernsprechgerät von der Fernsprechleitung trennt und den Bezugssignalgenerator mit der Fernsprechleitung verbindet bzw. die Fernsprechleitung mit der Pegelmeßeinrichtung verbindet.

**Revendications**

1. Appareil portable pour mesurer l'atténuation de la ligne téléphonique d'un abonné, comprenant un générateur de signal de référence (19), un dispositif de mesure de niveau (10—14) et des moyens commutateurs (P1, P2, P3) ayant trois positions de commutation différentes, la première connectant ledit dispositif de mesure de niveau à ladite ligne téléphonique, la seconde connectant ledit générateur de signal de référence à ladite ligne téléphonique et la troisième connectant ledit dispositif de mesure de niveau audit générateur de signal de référence pour vérifier ledit niveau de sortie, caractérisé en ce que les trois positions de commutation différentes sont réalisées par trois commutateurs à bouton-poussoir (P1, P2, P3), en ce qu'une connexion de courant continu entre les bornes (A1) de ladite ligne téléphonique est effective indépendamment du choix de celui des commutateurs à bouton-poussoir (P1, P2, P3) qui est manoeuvré, en ce que la connexion à courant continu comprend un téléphone de service ou une inductance (L1) montée en série avec une résistance (R3) en fonction du commutateur (P1, P2, P3) manoeuvré et en ce que l'impédance d'entrée de ladite inductance (L1) montée en série avec une résistance (R3) correspondant à l'impédance d'entrée dudit téléphone de service.

2. Appareil portable selon la revendication 1, caractérisé en ce qu'un condensateur (C3) est branché en parallèle avec l'inductance (L1) et en ce que le circuit résonant formé par l'inductance (L1) et le condensateur (C3) est accordé sur la fréquence dudit générateur de signal de référence (19).

3. Appareil portable selon l'une quelconque des revendications précédentes, caractérisé en ce que ledit dispositif de mesure de niveau comprend un amplificateur (10) connecté en série avec un redresseur (11) et avec un convertisseur analogique-numérique qui, au moyen d'éléments PROM (13, 13A, 13B) commande trois affichages (14, 14A, 14B) un affichage logarithmique du niveau du signal mesuré et/ou de l'atténuation.

4. Appareil portable selon la revendication 3, caractérisé en ce que la borne de sortie dudit redresseur (11) est également connecté à un comparateur de signaux (17) comparant le signal de sortie dudit redresseur (11) à un signal de référence de telle façon qu'un élément de type indicateur (18) soit excité, chaque fois que ledit signal dudit redresseur (11) est supérieur à une valeur prédéterminée.

5. Appareil portable selon l'une quelconque des revendications précédentes, caractérisé en ce que ledit téléphone de service est connecté avec ladite ligne téléphonique lorsqu'aucun des commutateurs à bouton-poussoir (P1, P2, P3) n'est enfoncé et en ce que le générateur de signal de référence (19) et ledit dispositif de mesure de niveau sont déconnectés par rapport à une source d'alimentation, lorsque lesdits trois commutateurs à bouton-poussoir (P1, P2, P3) ne sont pas enfoncés.

6. Appareil portable selon l'une quelconque des revendications précédentes, caractérisé en ce que l'activation du troisième commutateur à bouton-poussoir (P3) laisse le téléphone de service connecté à ladite ligne téléphonique et permet au signal généré par le générateur de signal de référence (19) d'être appliqué audit dispositif de mesure de niveau et en ce que l'activation desdits premier et second commutateurs à bouton-poussoir (P1, P2) déconnecte ledit téléphone de service de ladite ligne téléphonique et connecte ledit générateur de signal de référence à ladite ligne téléphonique et connecte respectivement ladite ligne téléphonique audit dispositif de mesure de niveau.

FIG.1

FIG.2

0 055 977